# EUROPEAN PATENT APPLICATION

(11) **EP 1 548 421 A1**
(43) Date of publication of application: **29.06.2005**
(21) Application number: 03794264.6
(22) Date of filing: 05.09.2003
(51) Int. Cl.: G01N 5/02

(54) **CRYSTAL OSCILLATOR NANOCHANNEL SENSOR**

(30) Priority: 05.09.2002 JP 2002260502
(71) Applicant: Tokyo University of Pharmacy and Life Science, Tokyo 192-0392 (JP)
(72) Inventor: UCHIDA, Tatsuya, Tachikawa-shi, Tokyo 190-0022 (JP); FUJIWARA, Kitao, Saitama-shi, Saitama 336-0018 (JP); IKEDA, Miwako, Nerima-ku, Tokyo 177-0041 (JP)
(74) Representative: Calamita, Roberto
(86) International application number: PCT/JP2003/011385
(87) International publication number: WO 2004/023108

(57) **Abstract**

The crystal oscillator nanochannel sensor comprises a nanochannel structure thin film arranged on an electrode surface of a crystal oscillator and having an oxide layer which contains a surfactant micelle. The sensor senses the existence of a target substance in an analyte solution through a weight change in a nanochannel caused by a recognition reagent and the target substance collected by the recognition reagent. The invention provides a new application of crystal oscillator sensors by utilizing a hydrophobic site provided by the surfactant in a nanometer-size pore.

## Description

### Technical Field

This invention relates to a crystal oscillator nanochannel sensor. This invention relates, particularly, to a new crystal oscillator nanochannel sensor which is useful as sensors for biochemical analysis, microanalysis and the like in a wide field such as a medical field, sanitary field, industrial field, agricultural field and environmental evaluation field by utilizing a nanometer size porous (nanochannel) structure.

### Background Art

Focusing an attention on nanometer size pores to make studies to produce porous (meso-porous) materials. In these conventional studies, an alkoxy silane compound is hydrolyzed in the presence of a surfactant to thereby form a porous material using the surfactant as a mold. As conventional technologies, there are some reports concerning, for example, the production of a meso-porous material on a mica substrate (Document 1), the production of a meso-porous thin film utilizing the vaporization of a solvent (Document 2) and patterning of a meso-porous thin film and functionalization using a silane coupling agent (Document 3).
Document 1: Hong Yang, et al., Nature, Vol. 379, 22 Feb. 1996, p. 703-705
Document 2: Yun Feng Lu, et al., Nature, Vol. 389, 25 Sep. 1997, p. 364-368
Document 3: Hongyou Fan, et aL, Nature, Vol. 405, 4 May. 2000, p. 56-60

However, the fact is that almost no technological development of a material with nanometer size pores and its thin film have been made in spite of the above investigations though there is a suggestion as to, for example, utilization as pH sensors or the like. For example, though it is expected to realize ultra-microanalysis by utilizing a nanometer scale pore structure, this has not been materialized.

One of the reasons is that though a surfactant is used as a mold for forming pores in prior art, this surfactant is removed by baking and therefore no attention has been paid to a hydrophobic field of the surfactant. Attention should be paid to this hydrophobic field for the development of functions as analytical sensors.

This invention has been made in view of the above situation and it is an object of the invention to provide a new technological means for making it possible to develop a material which has nanometer size pores and a function as sensors by focusing an attention on a hydrophobic field given by the presence of a surfactant used in its production process.

### Disclosure of Invention

This invention, which is to solve the above problem, provides, first, a nanochannel sensor comprising a nanochannel body thin film which has an oxide layer including surfactant micelles and is disposed on the surface of an electrode on a crystal oscillator of a crystal oscillator microbalance, the sensor detecting a change in the weight of the nanochannel body thin film, which change is caused by a collected target substance, as a change in the frequency of the crystal oscillator to thereby detect the existence of the target substance.

Also, This invention, second, provides a nanochannel sensor wherein a nanochannel body thin film in which a nanochannel body of the oxide layer is chemically modified is disposed on an electrode on a crystal oscillator of a crystal oscillator microbalance.

This invention, third, provides the crystal oscillator nanochannel sensor wherein the oxide layer of the nanochannel body is constituted primarily of silicon oxide.

This invention, fourth, provides the crystal oscillator nanochannel sensor for detecting the existence of a target substance in a sample liquid phase, fifth, provides the crystal oscillator nanochannel sensor for detecting the existence of a target substance by mixing a recognition reagent and a sample solution and extracting the recognition reagent and the target substance collected by the reagent in the nanochannel and sixth, provides the crystal oscillator nanochannel sensor for detecting the existence of a target substance by impregnating the nanochannel with a recognition reagent in advance to make the included recognition reagent collect a target substance in a sample solution.

Moreover, This invention, seventh, provides a crystal oscillator nanochannel sensor for detecting the existence of a target substance in a sample vapor phase.

A QCM method (Quartz Crystal Microbalance) is used in various fields as an in-situ measuring method capable of detecting a change in weight of the order of ng. In a general QCM method, a change in the weight (converted from a change in frequency) of a metal pole on a crystal oscillator along with the absorption of a substance to and desorption of a substance from the metal pole on a crystal oscillator is measured. Because the amount of a substance to be detected is therefore defined by the surface area of the metal pole, this method is unfit for the detection of molecules and ions having a small mass. In order to utilize QCM as a more common chemical sensor, it is considered to be necessary and indispensable to highly sensitize QCM. In view of this situation, this invention is a crystal oscillator sensor for QCM, to which a functional nanochannel thin film is applied as mentioned above. This sensor comprises a nanochannel structure provided with pores (nanochannel structure) having a diameter of several nm and a very high specific surface area (within 1000 m²/g) and a hydrophobic field formed by surfactant micelles in the nanochannel. Focusing an attention on this structure of the nanochannel thin film and this nanochannel thin film is fixed to the electrode of the crystal oscillator to enable QCM measurement utilizing a three-dimensional space and to make a large improvement in detection limit and sensitivity. Also, a hydrophobic circumstance in the pores is utilized to attain a chemical sensing making use of chemical modification in the pores and a molecule recognition reagent.

### Brief Description of Drawings

Fig. 1 is a view typically showing a nanochannel body thin film.
Fig. 2 is a view typically showing an extraction type and an impregnation type sensor.
Fig. 3 is a view illustrating the situation where Mg ions are detected using a crystal oscillator nanochannel sensor in an example.
Fig. 4 is a view showing the response characteristics of a crystal oscillator nanochannel sensor in the presence of no Qs.
Fig. 5 is a typical view showing the situation where a metal complex is collected by micelles in a nanochannel.
Fig. 6 is a view illustrating the Mg-concentration dependency of frequency change (weight change).
Fig. 7 is a view illustrating the situation where aluminum ions are detected high-sensitively by a crystal oscillator nanochannel sensor.
Fig. 8 is a view illustrating the situation where benzene in VOCs in the atmosphere is detected as a change in frequency.
Fig. 9 is a view illustrating the ability of detecting chloroform in VOCs quantitatively.
Fig. 10 is a view illustrating the detection of ethanol in an aqueous solution.
Fig. 11 is a view illustrating the detection of mercury ions.
Fig. 12 is a view illustrating the ability of detecting mercury ions quantitatively.

### Best Mode for Carrying Out the Invention

This invention has the characteristics as mentioned above. Embodiments of the invention will be hereinafter explained.

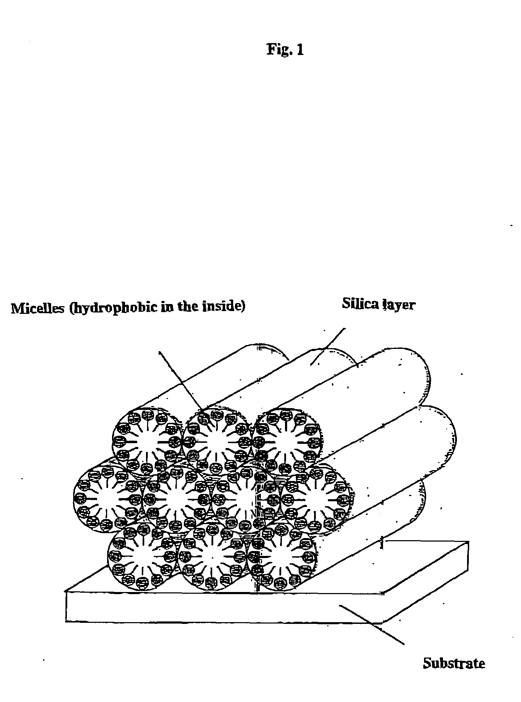

This invention is characterized above all as the nanochannel sensor structure in which the oxide layer includes surfactant micelles to retain a hydrophobic field in the nanochannel, and also by the detection of a target substance in a sample on the basis of a change in the weight of the nanochannel body thin film along with the collection of the target substance at a hydrophobic field. The nanochannel body thin film enabling such a unique structure and its action is considered to be, for example, the structure of Fig. 1 when it is typically shown as the case of a silicon oxide layer such as silica.

This nanochannel body may be preferably produced first from an oxide-formable alkoxide compound as starting material and a surfactant-containing acidic alcohol solution by heating or drying such that an oxide layer includes surfactant micelles. When the concentration of the starting material in the above solution is relatively low, micelles are formed during the course of vaporizing to dryness. Then, these micelles constitute a mold to Form a nanochannel body. When the concentration of the starting material is high, on the other hand, the starting material and the like are melted at high temperature under pressure and a nanochannel body is formed during this process.

As the oxide-formable alkoxide compound used in this case, any type may be used as long as it forms an oxide layer of a nanochannel structural body. Typical examples of the alkoxide compound used to form a silicon oxide layer include silicon alkoxide compounds. Besides, alkoxides of various types such as titanium, zirconium, hafnium, tantalum, niobium, gallium and rare earth elements may be taken into account.

As to the surfactant to be used together with these alkoxide compounds, various types may be taken into account. Typical examples of the surfactant include quaternary ammonium salt type surfactants as ionic surfactants. Also, sulfonic acid types are also exemplified. Polyether type nonionic surfactants may also be used. One of preferable surfactants among these surfactants is a cationic quaternary ammonium salt type.

Although the ratio of the alkoxide compound to the surfactant differs depending on the types of the both and no particular limitation is imposed on the ratio, the standard molar ratio of the surfactant to the alkoxide compound may be usually 0.01 to 0.5.

The alkoxide compound and the surfactant are mixed in an aqueous acidic solution, followed by heating. The heating temperature in this case may be a reflux temperature at the highest. Hydrochloric acid, sulfuric acid or an organic acid may be mixed to put the system into an acidic state. It is preferable that a low-boiling point alcohol such as ethanol, propanol or methanol is allowed to coexist in the aqueous solution.

A nanochannel body in this invention is formed after heating. At this time, a heated solution is spread on the electrode of the crystal oscillator, for example, on the surface of a gold electrode or the above solution is heated on this surface. This results in the production of a thin nanochannel body as typically shown in Fig.1. This product may be called a thin film.

Then, in this invention, a compound that improves the adhesion between the electrode and the thin film, for example, a mercapto compound in the case of a gold electrode and a hydrophobicity agent, such as a silane coupling agent, which is considered to be effective to retain the hydrophobicity of the pores of the nanochannel body may be added in the nanochannel body thin film forming solution together with the alkoxide compound and the surfactant in the formation of the aforementioned nanochannel body thin film.

When the nanochannel body thin film is dipped in water or an aqueous solution, a part of the surfactant micelles included in the nanochannel (pores) are eluted in water or an aqueous solution, so that there is the case where the hydrophobicity in the nanochannel is dropped with time. In this case, the inside wall of the nanochannel is hydrophobically treated in advance to increase the hydrophobic interaction between the surfactant micelles and this inside wall to thereby suppress the elution of the surfactant micelles in water or an aqueous solution.

This makes it possible to maintain good detecting sensitivity (accuracy) as a crystal oscillator nanochannel sensor.

It is taken account that it is preferable to use, for example, a mercaptoalkylalkoxysilane type compound having the ability to improve adhesion to the electrode and a function as a hydrophobicity agent.

Moreover, the nanochannel body may be chemically modified in consideration of the ability to collect a target substance as a subject to be detected by the sensor. In the case, for example, the above mercapto compound, it is effective for chemical modification as a material having the ability to collect specific metal ions.

The crystal oscillator type nanochannel sensor in this invention is constituted of the nanochannel body thin film including surfactant micelles in the oxide layer which may be manufactured by, for example, the above process. The object of this nanochannel sensor may be to detect a target substance in a sample liquid phase or in a vapor phase.

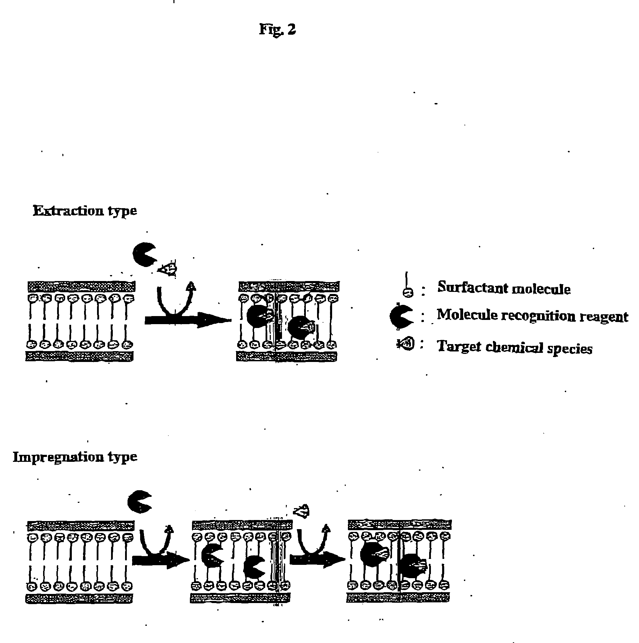

Also, a molecule recognition reagent having strong interaction on a target substance may coexist with the nanochannel body. The form of the molecule recognition reagent is largely classified into an extraction type and an impregnation type. Fig. 2 shows a view typically illustrating the outline in the case of using a molecule recognition reagent.

In the case of the extraction type, the molecule recognition reagent is dissolved, for example, in an aqueous sample solution to extract the molecule recognition reagent and a target chemical substance inside of the nanochannel by a hydrophobic interaction while forming a complex of the both. A change in the weight of a thin film which change is caused by a chemical substance collected in the thin film is detected based on a change in the frequency of the crystal oscillator. The advantage of the extraction type is that a change in the weight of the sum of the target chemical substance and the molecule recognition reagent is detected, showing higher sensitivity than in the case of detecting a change in the weight of single target chemical substance. On the other hand, in the case of the impregnation type, the molecule recognition reagent is introduced into the inside of the nanochannel from the aqueous solution in advance and then a target chemical substance in an aqueous sample solution is collected by the molecule recognition reagent to detect a change in the weight of the molecule recognition reagent on the basis of a change in the frequency of the crystal oscillator. This impregnation type makes it possible to detect various types of chemical substances at the same time by arranging sensors having different recognition reagents on the same substrate.

In all the above cases, various types may be used as the recognition reagent. Specifically, the recognition reagent may be those which can form complexes with target substances such as metal ions, inorganic compounds, synthetic organic compounds, natural organic substances and substances derived from live bodies, or those which can combined with target substances by a reaction and those which can collect these target substances physically. In the hydrophobic field inside of the nanochannel, recognition reagents having various functional groups in their molecular structures may also be used. Also, these reagents may be not only low-molecular compounds but also polymers or those derived from living bodies such as DNA, proteins and enzymes.

The crystal oscillator nanochannel sensor of this invention may be used to collect and detect target chemical species without using a special molecule recognition reagent by utilizing nanochannels (pores) as the aforementioned hydrophobic circumstance field. To state typical examples, detection of VOCs (volatile organic compounds) in the atmosphere. In recent years, there has been a problem concerning a sick house syndrome in which syndromes such as headache and dizziness are caused by the influence of VOCs (volatile organic compounds) delivered from such as building materials, furniture and adhesives. However, conventional VOC detectors have the problems such as long detection time, large-size and high cost. Therefore, it is desired to improve these analyzers in measuring quality and cost by developing small-sized and composite ones. Under this situation, a QCM (quartz crystal oscillator microbalance) sensor utilizing a nanochannel thin film according to this invention is formed using micelles (surfactant) as a mold, has a structure having a number of micropores (within 3 nm), has a very high specific surface area and also has a hydrophobic circumstance in the inside of the pores, making it possible to collect VOCs in these pores with high efficiency. This sensor can significantly improve the detection limit and sensitivity of QCMs.

As mentioned above, the crystal oscillator nanochannel sensor of this invention can be applied to a gas sensor. Of course, in the application to this gas sensor, the aforementioned specific molecule recognition reagents may be used corresponding to the target gas components.

Moreover, in the utilization of the hydrophobic circumstance field, the inside of pores of the nanochannel may be chemically modified hydrophobically to collect and detect the target chemical species by this chemically modified material. At this time, the surfactant micelles may be heated under reduced pressure to remove a part or all of the micelles.

In all of the above cases, the detection of a change in the weight of the nanochannel body thin film may be made in the same manner as in the case of the conventional QCM method.

The embodiment of the invention will be further explained in more detail by way of the following examples, which, however, are not intended to be limiting of the invention.

### Examples

### 1. Method of producing a thin film

First, a nanochannel body thin film was formed on the surface of a gold electrode above a crystal oscillator according to the following procedures.

### <Example of preparation of a thin film-forming solution>

■The thin film solution was made to have the following composition (molar ratio).
TEOS: EtOH: H₂O: HCl: CTAB: MPS = 1 : 17.54: 5.04: 0.004: 0.075: 0.1
MPS: 3-Mercaptopropyltrimethoxysilane
CTAB: Cetyltrimethylammonium bromide
TEOS: Tetraethyl orthosilicate

In this composition, MPS is added thereby to improve the adhesion of the thin film to the gold electrode on the crystal oscillator. A thiol group in MPS is considered to be bonded with the surface of gold chemically.

The procedures are as follows.
(1) EtOH 9.7 mL, TEOS 12.3 mL and 2.78×10⁻³ M HCl 1 mL were mixed and the mixture was refluxed at 60°C for 90 minutes.
(2) EtOH 18.4 mL, CTAB 1.519 g and 5.48×10⁻² M HCl 14 mL were added to the solution after the solution was refluxed, followed by mixing 30 minutes.
(3) MPS 14mL was added to the solution 1 mL of (2).
(4) The solution of (3) was diluted 50 times.

### <Film formation>

(1) The solution 1mL was dripped on the surface of the gold electrode of the crystal oscillator.
(2) The coating layer was dried for one hour.

With regard to this film formation, it was confirmed from the results of X-ray analysis that a nanometer order cyclic structure was formed in the thin film. It was also confirmed from simultaneous measurements of X-ray analysis and differential calories that the surfactant existed in the channel at about 300°C or less and a significant change in micro order structure was not observed.

### 2. Detection of magnesium ions

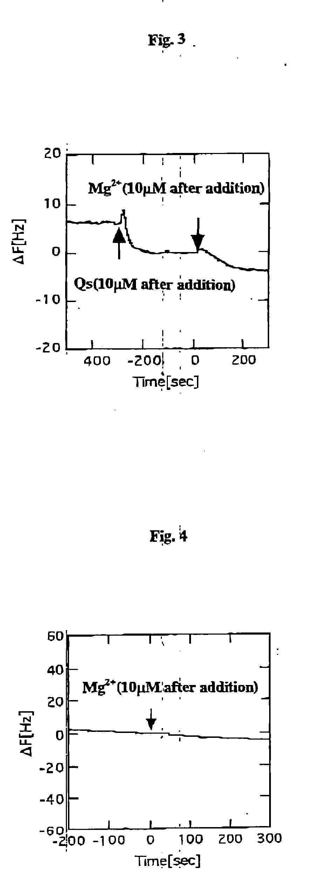

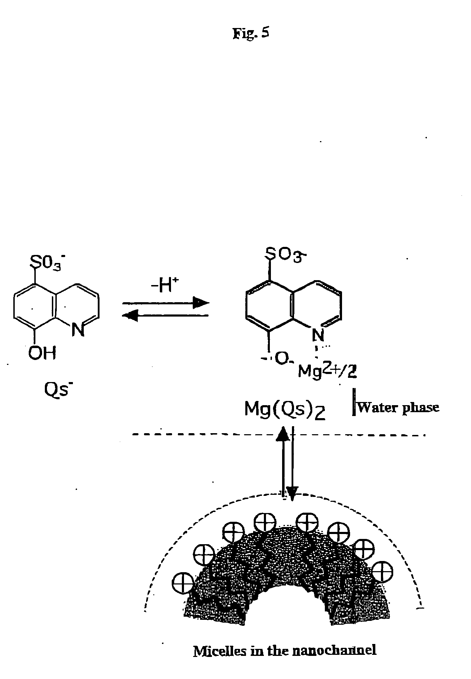

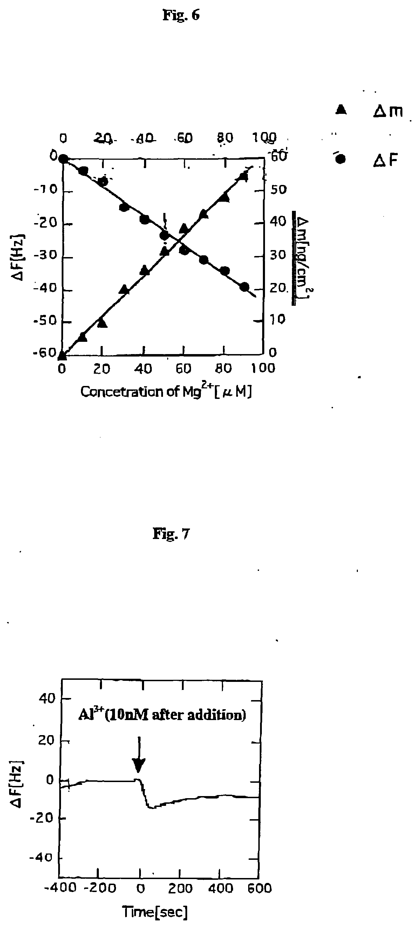

The sensor manufactured by the above process was placed in a solution cell filled with pure water and an aqueous solution containing 8-quinolinol-5-sulfonic acid (aqueous Qs solution) and an aqueous Mg solution were added in this order to the cell. The results are shown in Fig. 3. First, when Qs was added in an amount of 10µM, the frequency decreased with time and reached a fixed value. This is because Qs is introduced into the nanochannel and the weight of the film is therefore increased. Moreover, when Mg was added in an amount of 10µM, the frequency decreased with time and reached a fixed value. This is because Mg is introduced into the nanochannel and the weight of the film is therefore increased. On the other hand, when Qs was not added but only Mg was added, a change in frequency was not observed. Such a difference shows that the change in frequency as shown in Fig. 3 is caused by Mg in the presence of Qs because, as shown in Fig. 5, Mg existing in the aqueous solution is combined with Qs to form a complex and collected in the nanochannel at the same time. Fig. 6 shows the results of the investigation as to the Mg concentration dependency of a change in frequency. With an increase in the concentration of Mg, a change in frequency is decreased and a change in weight which is converted from a change in frequency is increased. The amount to be collected is changed in almost linear relation to the concentration of Mg, showing that this sensor is suitable for quantitative analysis of chemical substances. The accuracy of QCM in the measurement of frequency is about ±0.1 Hz and QCM can measure in a lower concentration range (ppt order).

### 3. Detection of aluminum ions

The sensor manufactured by the above process was placed in a solution cell filled with pure water and an aqueous Qs solution and an aqueous Al solution were added in this order to the cell. First, when Qs was added in an amount of 200µM, the frequency decreased with time and reached a fixed value. Moreover, when Al was added in an amount of 10µM, the frequency decreased with time and reached a fixed value. This results shows that this sensor can detect metal ions of the order of ppt.

### 4. Detection of VOC (volatile organic compound)

In addition to the above sensor, a sensor was prepared for comparison which was obtained by fixing a glass thin film having no nano-pore and manufactured from CTAB (solution containing no surfactant) to the gold electrode of the crystal oscillator in the above manufacturing method.

The both were placed stationarily in a simple chamber set to a temperature of 23°C.

After the frequency was stabilized, various VOC (volatile organic compound) solutions were respectively injected to detect the adsorption of the vaporized VOC gas from a change in frequency.

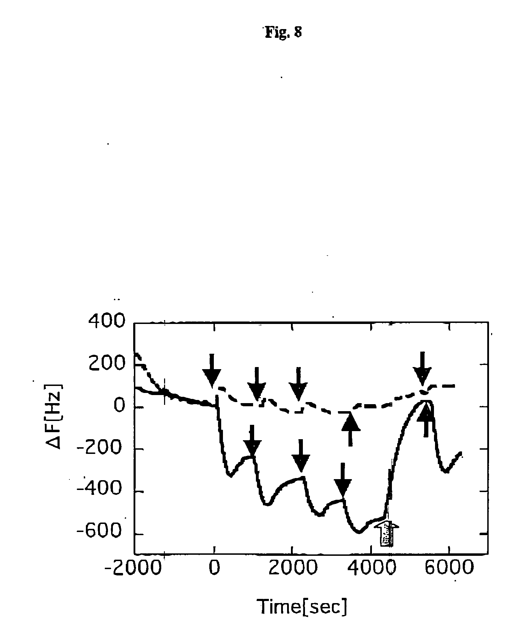

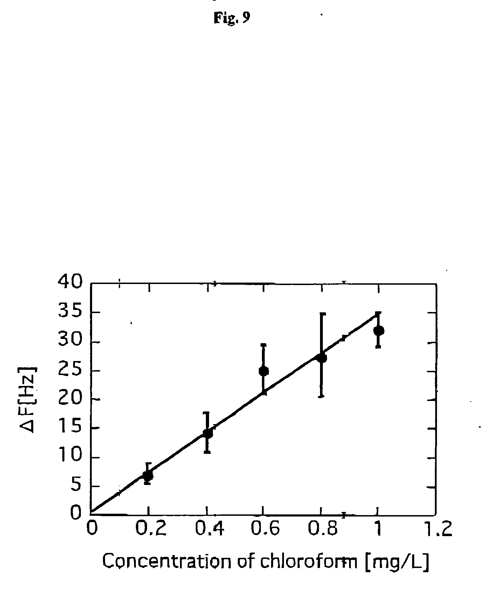

A trial was made to detect 50 mg/L of injected benzene by using the crystal oscillator to which the nanochannel thin film was fixed and as a result, it was observed that the frequency was reduced instantly by about 200 to 300 Hz as shown by the solid line in Fig. 8. The black arrow in Fig. 8 shows the situation where 50 mg/L of benzene is injected. On the other hand, in the case of using the glass thin film having no nano-pore (dotted line in Fig. 8), a reduction in frequency was not found. This is considered to be because an increase in weight as a result of the adsorption of chloroform to the nano-pores is observed as a reduction in frequency. Moreover, benzene gas in the chamber was substituted with the atmosphere (gray arrow in Fig.8) and as a result, the frequency was increased and restored to the initial value. This is considered to be because benzene adsorbed to the nano-pores are released. It was confirmed from this result that benzene was adsorbed to the nano-pores reversibly. The same experiments were made using chloroform, tetrachloroethylene and dichloromethane and as a result, almost the same results were obtained. For example, as shown by an example using chloroform in Fig. 9, it was confirmed that VOC was measured quantitatively and about 0.1 mg/L of VOC could be detected. Also, the same experiment was made using acetaldehyde and as a result, a reduction in frequency was observed in the case of using the glass thin film having no nano-pore and it was thereby confirmed that VOCs and aldehydes could be selectively detected based on the presence or absence of nano-pores.

### 5. Detection of ethanol in an aqueous solution

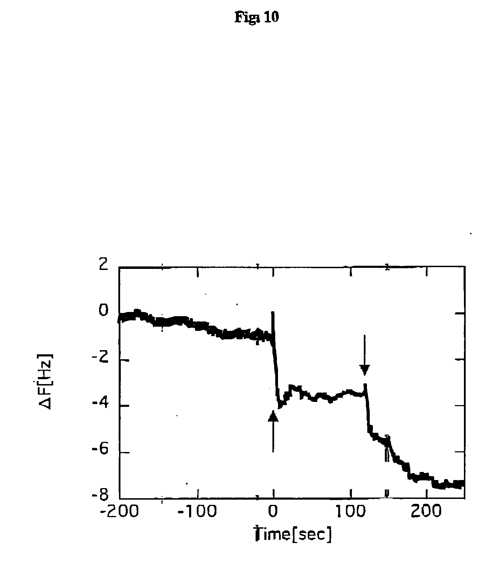

In the method of manufacturing a thin in the above 1., the molar ratio of TEOS : MPS : CTAB was 1 : 0.1 : 0.0075 to form a thin film, thereby forming a crystal oscillator nanochannel sensor. Then, this sensor was placed in ultra pure water to detect ethanol which was added in an amount of 0.01 %. The results are shown in Fig. 10. The arrow in Fig. 10 shows the situation where ethanol is added.

It was confirmed from this result that ethanol in an aqueous solution could be detected with high sensitivity by the crystal oscillator nanochannel sensor of this invention. From the fact that some response was observed in the case of the glass thin film having no nanochannel, it is estimated that collection by micropores using a solvent molecule as a mold which was formed in the production of the thin film participated in the detection of ethanoL

### 6. Selective detection of mercury ions

In the method of manufacturing a thin film in the above 1, the molar ratio of TEOS : MPS : CTAB was 1: 0.1: 0.0075 to form a thin film and the thin film was heat-treated at 200°C under vacuum. This crystal oscillator was incorporated into a solution holder and placed stationarily in a thermostatic water vessel kept at 23°C. After the frequency was stabilized, aqueous solutions containing various metal ions were respectively injected to measure a change in frequency. Also, a thin film having no nanochannel was produced and used in a control test.

When an aqueous mercury ion Hg (II) solution was injected in the situation where the frequency was stabilized such that the final concentration was 71µM, a significant reduction in frequency was observed. In the thin film having no nanochannel, on the other hand, a change in frequency which was caused by the injection of mercury ions was not observed. It was thereby confirmed that the observed reduction in frequency is because mercury ions are collected in the thin film pores from the aqueous solution. In succession, as to zinc ions and lead ions, experiments were made in the same concentration by using the crystal oscillator to which a thin film having the same condition as in the case of measuring mercury ions was fixed. As a result, reductions in frequency in the case of lead ions and in the case of zinc ions were about 1/35, and in the case of mercury ions were about 1/70. It is inferred from these results that a thiol group modified thin film of MPS has high selectivity to mercury ions

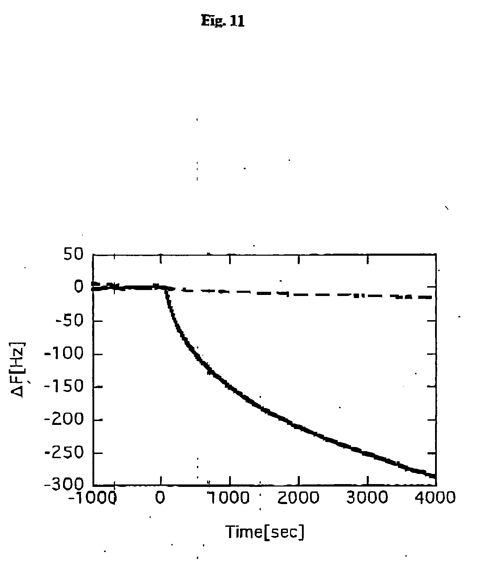

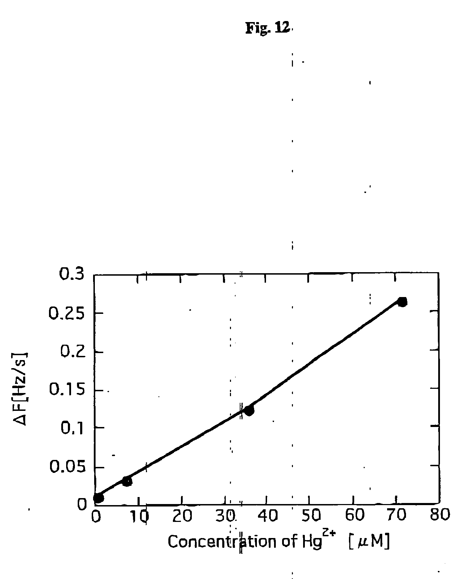

Fig. 11 illustrates a change in frequency (solid line) in the case of mercury ions Hg(II) and a change in frequency (dotted line) in the case of zinc ions Zn(II). Also, Fig. 12 shows that mercury ions Hg(II) can be quantitatively detected.

### Industrial Applicability

This invention offers the possibility of the development of new functions as a crystal oscillator sensor by focusing an attention on a hydrophobic field given by the presence of a surfactant included in a nanochannel body having nanometer size pores, as described specifically above.

## Claims

1. A crystal oscillator nanochannel sensor comprising a nanochannel body thin film which has an oxide layer including surfactant micelles and is disposed on the surface of an electrode on a crystal oscillator of a crystal oscillator microbalance, the sensor detecting a change in the weight of the nanochannel body thin film, which change is caused by a collected target substance, as a change in the frequency of the crystal oscillator to thereby detect the existence of the target substance.

2. A crystal oscillator nanochannel sensor comprising a nanochannel body thin film in which a nanochannel body of the oxide layer is chemically modified and which is disposed on an electrode on a crystal oscillator of a crystal oscillator microbalance, the sensor detecting a change in the weight of the nanochannel body thin film, which change is caused by a collected target substance, as a change in the frequency of the crystal oscillator to thereby detect the existence of the target substance.

3. The crystal oscillator nanochannel sensor according to claim 1 or 2, wherein the oxide layer of the nanochannel body is constituted primarily of silicon oxide.

4. The crystal oscillator nanochannel sensor according to any of claims 1 to 3, the sensor detecting the existence of a target substance in a sample liquid phase.

5. The crystal oscillator nanochannel sensor according to claim 1 or 4, the sensor detecting the existence of a target substance by mixing a recognition reagent and a sample solution and extracting the recognition reagent and the target substance collected by the reagent in the nanochannel.

6. The crystal oscillator nanochannel sensor according to claim 4, the sensor detecting the existence of a target substance by impregnating a nanochannel with a recognition reagent in advance to make the included recognition reagent collect a target substance in a sample solution.

7. The crystal oscillator nanochannel sensor according to any of claims 1 to 3, the sensor detecting the existence of a target substance in a sample vapor phase.
